# EUROPEAN PATENT SPECIFICATION

(11) **EP 4 131 727 B1**
(45) Date of publication and mention of the grant of the patent: **08.11.2023**
(21) Application number: 22185929.1
(22) Date of filing: 20.07.2022
(51) Int. Cl.: H02K 1/16, H02K 3/24, H02K 9/19

(54) **STATOR STRUCTURE AND FLAT WIRE MOTOR**
STATORSTRUKTUR UND FLACHDRAHTMOTOR
STRUCTURE DE STATOR ET MOTEUR À CÂBLE PLAT

(30) Priority: 04.08.2021 CN 202110890804
(43) Date of publication of application: 08.02.2023
(73) Proprietor: Jing-Jin Electric Technologies Co., Ltd., Beijing (CN)
(72) Inventor: XU, Xin, Beijing (CN); ZHANG, Liangliang, Beijing (CN); HAN, Lei, Beijing (CN); CAI, Chunxia, Beijing (CN)
(74) Representative: Tana, Maria Gabriella

(56) References cited:
- EP-A1- 2 523 312
- EP-A1- 3 836 358
- CN-A- 1 111 411
- CN-A- 109 638 991
- CN-A- 112 421 815
- US-A1- 2005 012 409

## Description

### TECHNICAL FIELD

The present disclosure relates to the technical field of a flat wire motor, and more particularly, to a stator structure and a flat wire motor using the same.

### BACKGROUND

At present, the flat wire motor is widely used in the field of new energy electric vehicles. By reducing the cross-sectional area of the flat wire conductor and increasing the number of flat wire conductor layers in each slot, the flat wire eddy current loss in the high-speed section of the motor caused by the skin effect caused by the high-frequency change of the magnetic field can be reduced, thereby improving the motor efficiency.

However, there are the following problems in the above method of reducing the eddy current loss of the flat wire in the high-speed section of the motor: reducing the cross-sectional area of the flat wire conductor will increase the DC resistance and reduce the advantage of the flat wire winding, and further reduce the efficiency of the motor in the low-speed and low torque section and the vehicle cruising conditions.

In addition, the number of turns of the flat wire winding is affected by the number of stator slots, the number of rotor poles, the number of flat wire conductor layers per slot and the number of parallel branches, so after the motor output performance is determined, the number of flat wire conductor layers per slot has design limitations and is not easy to be adjusted. In this case, in order to achieve the required number of turns, while increasing the number of flat wire conductor layers, it may need to design a stator core with different slot numbers and a rotor core with different pole numbers, which is not conducive to the platformization and universal design of new energy vehicle motors.

Document EP3 836 358 A1, according to its abstract, discloses an armature and an armature production method. In this armature, between the first segment conductor and the second segment conductor that are joined to each other in the joint portion, a first clearance portion is provided between the tip end portion of the first leg portion and the second leg portion body portion in the axial direction, and a second clearance portion is provided between the tip end portion of the second leg portion and the first leg portion body portion in the axial direction.

Document CN1 111 411 A, according to its abstract, discloses an electric machine with stacked slot wedge of alternated ferromagnetic material and nonmagnetic material. In this new-type electric machine, the slot wedge is a stacked structure of alternated ferromagnetic material and nonmagnetic material cohered into a whole body. The stacked plane is parallel to the wall of iron teeth and perpendicular to the surface of rotor cylinder. The slot wedge is inserted into iron core along the opening of slot.

Document US2005/012409 A1, according to its abstract, discloses a device for cooling an electrical machine, in particular a synchronous electrical machine having permanent magnets. The cooling device comprises, in each of the stator recesses which contain windings, a cooling tube located in the longitudinal direction of the recess and supplied with cooling fluid. The cooling tube is located in the inlet portion of each of the recesses which is closest to the air gap, and thus constitutes a thermal barrier between the windings of the stator and the permanent magnets carried by the rotor. A device for the external cooling of the stator may be combined with the tubes for cooling the internal portion of the stator.

Document EP 2 523 312 A1, according to its abstract, discloses a stator arrangement for an electric machine, comprising a stator having a stator yoke with a number of stator slots, with each stator slot accommodating at least one set of stator windings and at least one cooling means in the shape of a duct-like pipe, wherein the duct-like pipe is divided in two or more separate cooling channels.

Document CN 112 421 815 A, according to its abstract, discloses a flat wire stator structure and flat wire motor. The stator iron core comprises a cylindrical iron core body with an inner cylinder cavity. A plurality of stator grooves extending in the axial direction of the iron core body are evenly formed in the annular end face of the iron core body, and each stator groove communicates with an inner cylinder cavity of the iron core body through a groove opening. The stator winding comprises winding units which are inserted into the stator grooves. Each winding unit comprises a plurality of flat wire conductors inserted in the corresponding stator groove side by side and at least one fine wire rod formed by winding a plurality of strands of fine wires in parallel, and the fine wire rod is arranged adjacent to the groove opening of the stator groove. According to the invention, the problem of large eddy-current loss caused by more obvious skin effect during high-speed operation of the motor in the prior art can be solved.

### SUMMARY

In view of the above problems, the present disclosure discloses a novel form of stator structure and flat wire motor to solve or at least partially solve the above problems.

In order to achieve the above object, the present disclosure adopts the following technical solutions:
A stator structure according to claim 1.

Optionally, the avoidance layer is made of a material same as the stator core; the avoidance layer is located inside the iron core slot and is fixed on two sides of a channel between the slot opening and the first layer of flat wire conductor.

Optionally, the avoidance layer has a size of 1 ~ 6 mm in the radial direction of the stator core.

A flat wire motor comprises any of the stator structures described above.

The advantages and beneficial effects of the present disclosure are as follows.

In the stator structure of the present disclosure, by providing the avoidance layer between the slot opening and the first layer of flat wire conductor, the distance between the first layer of flat wire conductor and the slot opening is increased by means of the avoidance layer. In this way, during the operation of the motor, the skin effect caused by the high-frequency change of the magnetic field will act on the avoidance layer, thereby reducing the skin effect generated at the first layer of flat wire conductor, weakening the influence of the slot leakage flux on the first layer of flat wire conductor, reducing the eddy current loss of the first layer of flat wire conductor, reducing the eddy current loss of the whole motor, and thus achieving the technical effect of improving the motor efficiency.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:
FIG. 1 is a schematic diagram of the appearance of a stator structure according to a first embodiment of the present disclosure;
FIG. 2 is a schematic diagram of an end face structure of the stator structure after removing an end of the stator windings according to the first embodiment of the present disclosure;
FIG. 3 is a schematic partially enlarged diagram of the stator structure according to the first embodiment of the present invention;
FIG. 4 is a schematic partially enlarged diagram of a stator structure according to a second embodiment which is not part of the present invention;
FIG. 5 is a schematic diagram of the appearance of a stator structure according to a third embodiment which is not part of the present invention;
FIG. 6 is a schematic diagram of an end face structure of the stator structure after removing an end of the stator windings according to the third embodiment which is not part of the present invention;
FIG. 7 is a schematic partially enlarged diagram of the stator structure according to the third embodiment which is not part of the present invention;
FIG. 8 shows a motor efficiency map of a base group;
FIG. 9 shows the efficiency difference between a comparison group I and the base group;
FIG. 10 shows the efficiency difference between a comparison group II and the base group;
FIG. 11 shows the efficiency difference between a comparison group III and the base group; and
FIG. 12 is a schematic diagram of the appearance of a connection between a virtual conductor and a cooling ring according to the third embodiment which is not part of the present invention.

In the drawings: 11, stator core; 12, stator winding; 13, avoidance layer; 111, inner cylinder cavity; 112, iron core slot; 113, slot opening; 121, flat wire conductor; 21, stator core; 23, avoidance layer; 213, slot opening; 221, flat wire conductor; 31, stator core; 32, stator winding; 33, avoidance layer; 34, cooling ring; 312, iron core slot; 313, slot opening; 321, flat wire conductor; 341, port.

### DETAILED DESCRIPTION

In order to make the objectives, technical solutions, and advantages of the present application clearer, the technical solutions of the present application will be described clearly and completely in conjunction with specific embodiments of the present application and corresponding drawings. Obviously, the described embodiments are only part of the embodiments of the present application, rather than all of the embodiments. Based on the embodiments in the present application, all other embodiments obtained by those of ordinary skill in the art without paying creative work shall fall within the protection scope of the present application which is defined by the appended claims.

The technical solutions according to the embodiments of the present disclosure are described in detail below in conjunction with the accompanying drawings.

### First Embodiment

This embodiment discloses a stator structure, which can be used as the stator structure of a flat wire motor to reduce the eddy current loss of the flat wire conductor near the slot opening and improve the efficiency of the whole motor.

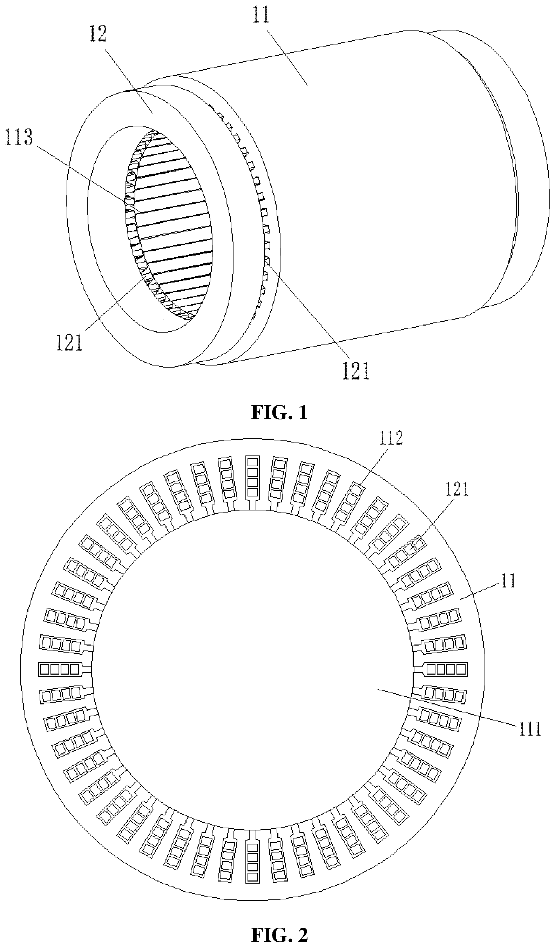

As shown in FIGS. 1 to 3, the stator structure of this embodiment comprises a stator core 11, stator windings 12 and an avoidance layer 13. The stator core 11 is cylinder shaped and has an inner cylinder cavity 111 for installing the rotor. There are 48 iron core slots 112 arranged at intervals in a circumferential direction on an axial end face of the stator core 11, and the iron core slots 112 run through the entire stator core 11 in the axial direction of the stator core 11. Each iron core slot 112 is respectively communicated with the inner cylinder cavity 111 via a corresponding slot opening 113. The stator windings 12 have flat wire conductors 121 wound in the core slots 112, four layers of flat wire conductor 121 are inserted in parallel inside each core slot 112, and insulating paper is laid between the flat wire conductor 121 and an inner wall of the core slot 112. In the radial direction of the stator core 11, the avoidance layer 13 is fixed between each slot opening 113 and a first layer of flat wire conductor 121 in the corresponding core slot 112.

In this embodiment, the avoidance layer 13 is made of a material same as the stator core 11, such as silicon steel. Moreover, the avoidance layer 13 is located inside the core slot 112 as a separate structure; it is not part of the stator winding 12 and is not connected with the winding formed with the flat wire conductor 121. The avoidance layer 13 is composed of two trapezoidal blocks, and the two trapezoidal blocks are fixed on the stator core 11 on two sides of a radial channel between the slot opening 113 and the first layer of flat wire conductor 121. At the same time, the avoidance layer 13 forms a part of the radial channel between the slot opening 113 and the first layer of flat wire conductor 121. The included angle between the upper bottom and the inclined waist of the avoidance layer 13 is directly used as the inclination angle of the slot shoulder, and may be selected within 0° ~ 90° according to the design.

When the avoidance layer is provided between the slot opening and the first layer of flat wire conductor and is made of a material same as the stator core, by fixing the avoidance layer on two sides of the radial channel between the slot opening and the first layer of flat wire conductor in the iron core slot, a slot opening suspended shift design is formed. In other words, compared with the conventional stator structure, in the stator structure of this embodiment, the distance between the first layer of flat wire conductor and the slot opening in the radial direction of the stator core is increased. In this way, during the high-speed operation of the motor, the skin effect caused by the high-frequency change of the magnetic field will act on the avoidance layer, and the skin effect generated at the first layer of flat wire conductor will be reduced, thereby weakening the influence of the slot leakage flux on the first layer of flat wire conductor, reducing the eddy current loss of the first layer of flat wire conductor, and further reducing the eddy current loss of the whole motor, and thus achieving the technical effect of improving the motor efficiency.

With respect to most flat wire motors currently used in new energy electric vehicles, i.e., the stator cores with an outer diameter of less than 500 mm and a slot opening size of 0.5 ~ 1.5 mm in the radial direction of the stator core, the size of the avoidance layer in the radial direction of the stator core is preferably designed as 1 ~ 6 mm. In this way, while effectively reducing the skin effect at the first layer of flat wire conductor and weakening the influence of slot leakage flux, the size of the whole stator structure can be controlled so as to meet the requirement when the flat wire motor with this stator structure is used in new energy electric vehicles. Of course, with respect to larger flat wire motors used in other working conditions, the size of the avoidance layer in the radial direction of the stator core, that is, the slot opening suspended shift size, can be adjusted according to the specific situation, so as to effectively increase the distance between the first layer of flat wire conductor and the slot opening and weaken the influence of slot leakage flux.

### Second Embodiment

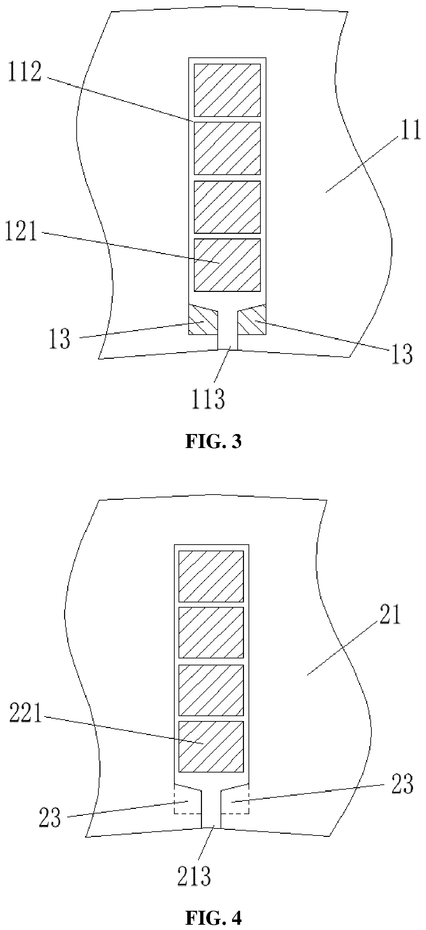

This embodiment which is not part of the invention discloses a stator structure as shown in FIG. 4. Compared with the first embodiment, in the stator structure of this embodiment, the avoidance layer 23 directly constitutes a part of the slot shoulder in the stator core 21. Compared with the conventional stator core, in this embodiment, the size of the avoidance layer 23 in the radial direction of the stator core 21 is transferred to the size of the teeth in the stator core 21 in the radial direction of the stator core 21, thereby increasing the distance between the slot opening 213 and the first layer of flat wire conductor 221, and forming a slot opening suspended shift design.

Thus, during the preparation of the stator core, the radial size of the teeth in the stator core is correspondingly increased and adjusted according to the radial size of the avoidance layer, and the avoidance layer directly constitutes a part of the stator core, thus eliminating the separate preparation of the avoidance layer and subsequent reinstallation of the avoidance layer, and thus optimizing the preparation process of the slot opening suspended shift design.

### Third Embodiment

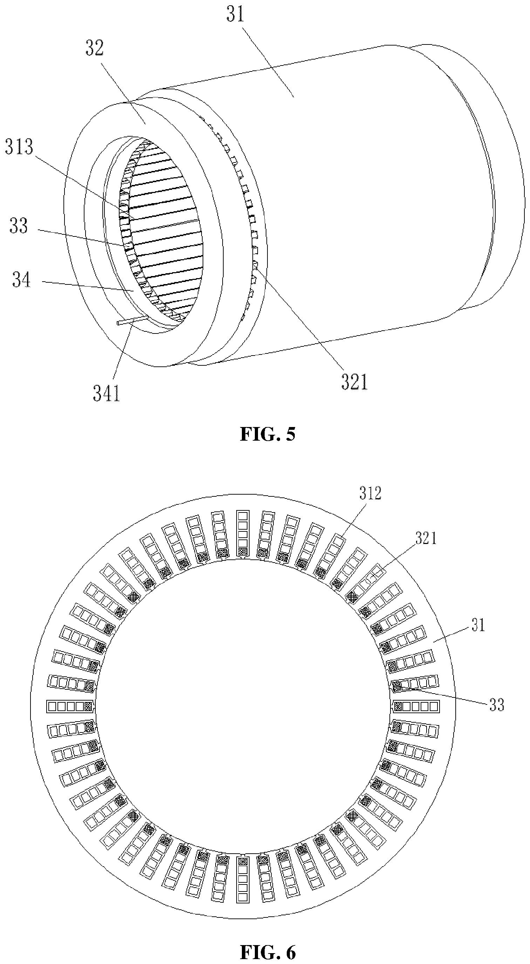

As shown in FIG. 5 to FIG. 7, this embodiment which is not part of the invention discloses a stator structure which can also be used in a flat wire motor. The stator structure comprises a stator core 31, stator windings 32 and an avoidance layer 33. Compared with the stator structure in the first embodiment, in the stator structure of this embodiment, the avoidance layer 33 is a non-magnetically permeable and non-conductive layer made of a non-magnetically permeable and non-conductive material, and is located between the slot opening 313 and the first layer of flat wire conductor 321 inside the iron core slot 312, so it is located inside the iron core slot 312 as a virtual conductor. At the same time, an insulating contact is formed between the avoidance layer 33 and the iron core slot 312 and between the avoidance layer 33 and the flat wire conductor 321.

Thus, in this embodiment, the virtual conductor design is used, and the avoidance layer is taken as a non-magnetically permeable and non-conductive virtual conductor and is fixed at the position closest to the slot opening in the iron core slot, so that the virtual conductor replaces the position of the first layer of flat wire conductor in the iron core slot in the conventional stator structure, the first layer of flat wire conductor is shifted outward in the radial direction of the iron core slot, thereby increasing the distance between the first layer of flat wire conductor and the slot opening. In this way, during the high-speed operation of the motor, the skin effect caused by the high-frequency change of the magnetic field is concentrated at the virtual conductor, thereby weakening the influence of the slot leakage flux on the first layer of flat wire conductor, reducing the eddy current loss of the first layer of flat wire conductor, and further reducing the eddy current loss of the whole motor, and thus achieving the technical effect of improving the motor efficiency.

Specifically, with respect to most flat wire motors currently used in new energy electric vehicles, i.e., the stator cores with an outer diameter of less than 500 mm and a slot opening size of 0.5 ~ 1.5 mm in the radial direction of the stator core, in this embodiment, the virtual conductor with a preferable size of 1 ~ 6 mm in the radial direction of the stator core is inserted in the position near the slot opening in the iron core slot while the slot opening size in the radial direction of the stator core remains unchanged, and then the flat wire conductors are inserted into the iron core slot in sequence, thereby achieving the effect of increasing the distance between the first layer of flat wire conductor and the slot opening.

In this embodiment, the avoidance layer is made of a non-magnetically permeable and non-conductive polymer resin material, thereby preparing the virtual conductor. In this way, by taking the advantages of low cost, easy processing and light weight of resin materials, the weight and cost of the whole stator structure can be reduced, and thus the lightweight and low cost of the motor can be achieved.

In addition, in the present disclosure, the avoidance layer does not belong to a part of the stator windings and is not in connection with the windings formed by the flat wire conductors, so when the avoidance layer adopts the structural forms in the first and third embodiments, its position can be fixed by means of bonding or filling the slot opening with glue to ensure the normal operation of the motor.

Next, three different forms of stator structure, i.e., the conventional stator structure, the slot opening suspended shift stator structure and the virtual conductor stator structure, will be compared and analyzed. Among them, the slot opening height of the conventional stator structure is 1 mm, and while the tooth width, yoke height and the number of flat wire conductor layers in the stator structure remain unchanged, the slot opening height in the slot opening suspended shift stator structure is designed as 4 mm, and the size of the virtual conductor in the virtual conductor stator structure is designed as 3 mm, so that the distance between the first layer of the flat wire conductor and the slot opening in both the slot opening suspended shift stator structure and the virtual conductor stator structure is increased by 3 mm. The flat wire conductors with a same size are used in the slot opening suspended shift stator structure and the virtual conductor stator structure.

With the rotating speed of 6000 rpm, the simulation analysis is carried out for the three different forms of stator structures, all of which adopt 8 layers of flat wire conductors, and the AC loss ratio data of each layer of flat wire conductor in the three different forms of stator structures are obtained, as shown in Table 1.

**Table 1**

| Flat wire conductor layer No. | 1 | 2 | 3 | 4 | 5 | 6 | 7 | 8 |
|---|---|---|---|---|---|---|---|---|
| Conventional stator structure | 43.7 | 16.0 | 11.1 | 8.5 | 6.7 | 5.4 | 4.5 | 4.1 |
| Slot opening suspended shift stator structure | 29.3 | 15.7 | 12.6 | 10.6 | 9.2 | 8.1 | 7.4 | 7.1 |
| Virtual conductor stator structure | 22.8 | 17.0 | 14.0 | 11.7 | 10.1 | 8.8 | 8.0 | 7.6 |

As shown in Table 1, compared with the conventional stator structure in which the AC loss ratio of the first layer of flat wire conductor is 43.7%, the AC loss ratio of the first layer of flat wire conductor in the slot opening suspended shift stator structure is reduced to 29.3%, and the AC loss ratio of the first layer of flat wire conductor in the virtual conductor stator structure is reduced to 22.8%, and thus the eddy current loss of the first layer of flat wire conductor is greatly reduced. At the same time, compared with the conventional stator structure in which the AC loss ratio between the first layer and the last layer of flat wire conductor is 10.6 times, the AC loss ratio between the first layer and the last layer of flat wire conductor in the slot opening suspended shift stator structure is reduced to 4.1 times, and the AC loss ratio between the first layer and the last layer of flat wire conductor in the virtual conductor stator structure is further reduced to 3 times.

Therefore, compared with the conventional stator structure, in the slot opening suspended shift stator structure and the virtual conductor stator structure, not only the AC loss ratio of the first layer of flat wire conductor is reduced, the AC loss ratio distribution among the flat wire conductor layers tends to be average, thereby greatly weakening the aggregation effect of eddy current at slot openings. In this way, the aggregation of heat in a single layer of flat wire conductor can be avoided, thereby prolonging the working life of the whole stator structure and improving the working stability of the motor.

Further, the motor efficiencies of the three different forms of stator structure are compared and analyzed. The motor with the conventional stator structure having 24 turns and 8 layers of flat wire conductor is taken as the base group. While the size of the iron core slot and the number of turns in the stator structure remain unchanged, the motor with the conventional stator structure having 6 layers of flat wire conductor is taken as the comparison group I, the motor with the slot opening suspended shift stator structure having 6 layers of flat wire conductor is taken as the comparison group II, and the motor with the virtual conductor stator structure having 6 layers of flat wire conductor is taken as the comparison group III. The sizes of flat wire conductors and copper weights in the four groups are shown in Table 2.

**Table 2**

| Group | Base group | Comparison group I | Comparison group II | Comparison group III |
|---|---|---|---|---|
| Flat wire conductor size [mm] | 4.2×2.4 | 4.2×3.3 | 4.2×2.97 | 4.2×2.97 |
| Copper weight [kg] | 14.8 | 15.3 | 13.7 | 13.7 |

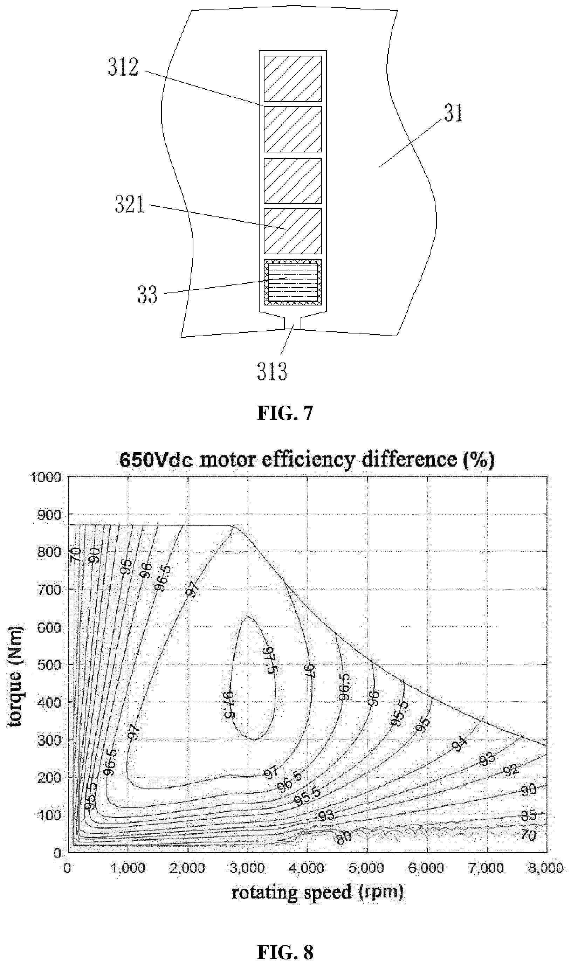

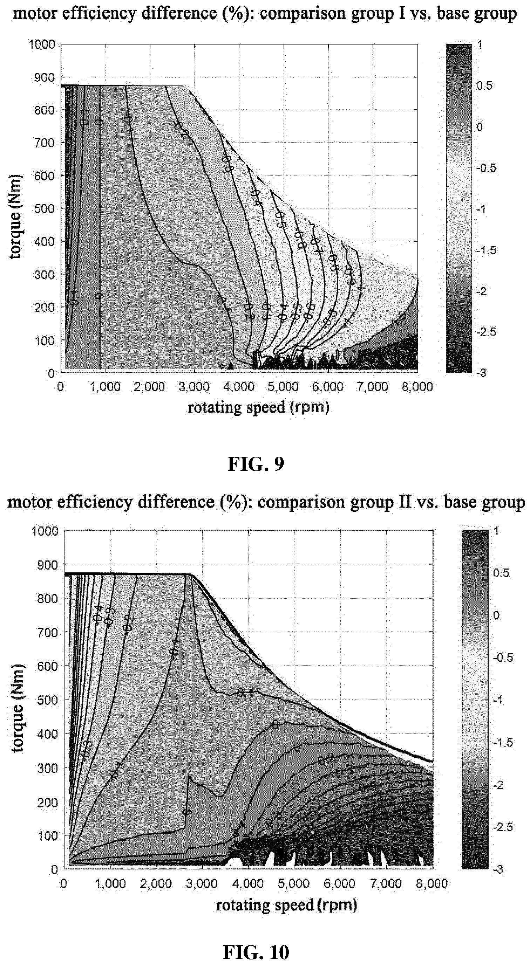

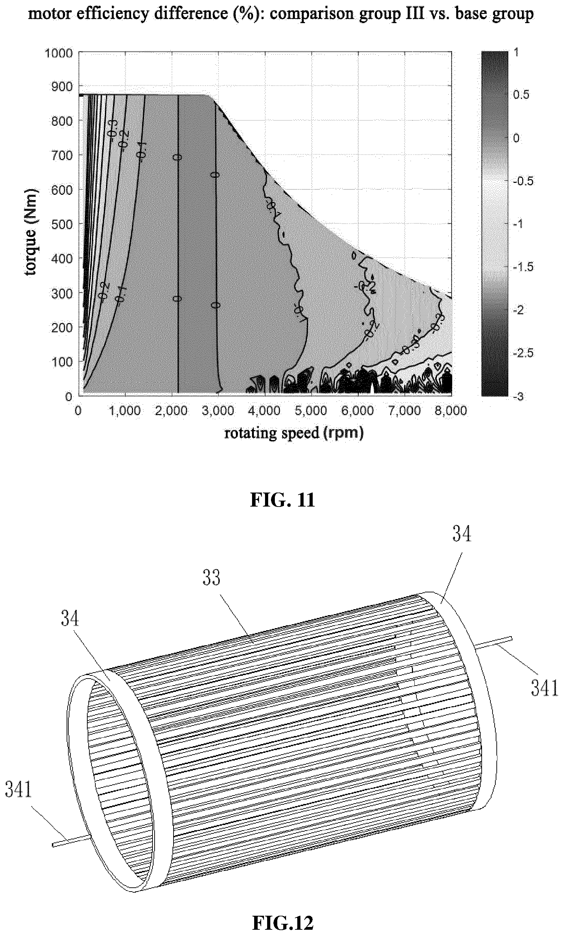

Through simulation analysis, the motor efficiency map of the base group shown in FIG. 8, the efficiency difference between the comparison group I and the base group shown in FIG. 9, the efficiency difference between the comparison group II and the base group shown in FIG. 10, and the efficiency difference between the comparison group III and the base group shown in FIG. 11 are obtained respectively.

As shown in FIG. 8 and FIG. 9, compared with the motor with the conventional stator structure having 8 layers of flat wire conductor, when the stator structure remains unchanged, and the number of flat wire conductor layers in each iron core slot is reduced to 6 by increasing the size of a single flat wire conductor, the cross-sectional area of a single flat wire conductor is larger and the DC loss is reduced, and the motor efficiency is increased by 0.2% at the low speed range of 0 ~ 900 rpm. On the other hand, the AC loss increases rapidly with the increase of rotating speed. When the rotating speed is increased to 8000 rpm, the motor efficiency is decreased by 1.5%. Therefore, when the conventional stator structure is adopted, the efficiency of the motor under middle and high speed conditions can be improved by increasing the number of flat wire conductor layers in each iron core slot.

As shown in FIG. 8 and FIG. 10, compared with the conventional stator structure having 8 layers of flat wire conductors, when the slot opening suspended shift stator structure is adopted, and the number of flat wire conductor layers in each iron core slot is reduced to 6 by increasing the size of a single flat wire conductor, the efficiency of the motor with the slot opening suspended shift stator structure gradually increases with the increase of rotating speed. When the rotating speed is increased to 8000 rpm, the motor efficiency is increased by about 0.5%. Further, as shown in Table 2, the copper weight when the slot opening suspended shift stator structure is used and the number of flat wire conductor layers is reduced to 6 is lower than that of the 8 layers of flat wire conductor when the conventional stator structure is used. Therefore, compared with the conventional stator structure, the slot opening suspended shift stator structure can not only reduce the copper weight and copper consumption, but also improve the high-speed efficiency of the motor.

As shown in FIG. 8 and FIG. 11, compared with the motor with the conventional stator structure having 8 layers of flat wire conductor, when the virtual conductor stator structure is adopted, and the number of flat wire conductor layers in each iron core slot is reduced to 6 by providing a virtual conductor in the iron core slot and increasing the size of a single flat wire conductor, it can be ensured that the motor efficiency is basically unchanged under the common working conditions of 1000 ~ 4000 rpm; moreover, the fluctuation of motor efficiency can be stabilized within 0.1%. At the same time, as shown in table 2, the copper weight and copper consumption can be reduced.

In conclusion, by providing the avoidance layer between the slot opening and the first layer of flat wire conductor in the stator structure, not only can the copper consumption be effectively reduced, but the more layers of flat wire conductor can also be replaced with the fewer layers of flat wire conductor while the motor efficiency is stabilized or even improved, thereby improving the flexibility of turn number selection and the universality of iron core punchings. In other words, when the turn number of windings is the same, the number of flat wire conductor layers can be reduced, thereby reducing the copper consumption and the difficulty of installing wirings while ensuring the motor efficiency; and when the selection of turn number of windings is limited, the number of layers can be flexibly reduced to realize a new turn number of windings, so that the iron core punchings and mold do not need to be re-developed, and thus the design and manufacturing cost can be reduced.

As shown in FIG. 5, FIG. 7 and FIG. 12, in the stator structure of the third embodiment, the avoidance layer 33 using a virtual conductor is a hollow structure, and is made of a non-magnetically permeable, non-conductive and thermally conductive material; moreover, a cooling medium, such as gearbox oil, is provided inside the avoidance layer 33 so that the avoidance layer 33 forms a thermally conductive layer. In this way, the flow of the cooling medium in the virtual conductor is used to exchange and transfer heat, and thus the stator structure can be cooled.

In this way, while the avoidance layer using a virtual conductor can reduce copper consumption, improve the flexibility of turn number selection and the universality of iron core punching, the stator structure can also be cooled, and thus the effect of using the flat wire motor with this stator structure in new energy electric vehicles can be further improved.

Further, in the stator structure of the third embodiment, two cooling rings 34 are further provided. The cooling rings 34 are a hollow structure and provided with ports 341. The two cooling rings 34 are respectively located at two ends of the stator core 31 in the axial direction of the stator core 31, and are communicated with the end faces of all the virtual conductors used as the avoidance layer 33, so that all the virtual conductors form a whole and the ports 341 on the two cooling rings 34 are respectively used as the inlet and outlet of the cooling medium to realize the circulating flow of the cooling medium and improve the cooling effect on stator structure.

Still Further, the circumferential sectional area of the cooling ring is designed to be no less than the sectional area of the virtual conductor in the axial direction of the stator core. In this way, the cooling medium can flow out of the virtual conductor and into the cooling ring timely and quickly to ensure the cooling effect on the stator structure.

In addition, in other embodiments, the number and position of ports on the cooling rings can be adjusted according to the size of the cooling rings and the requirements of cooling, so as to realize different circulating flow effects of the cooling medium to meet different cooling requirements.

Of course, in other embodiments, cooling water can also be used as the cooling medium to cool the stator structure according to the different design and use environment. In addition, in this embodiment, the virtual conductor adopts a hollow structure made of a non-magnetically permeable, non-conductive and thermally conductive material, and it cooperates with the cooling medium to cool the stator structure, however, in other embodiments, when the virtual conductor is made of a material with high heat conductivity, the virtual conductor can also be directly designed as a solid structure, thereby eliminating the use of the cooling medium, and making use of the high heat conductivity of the material to quickly draw out the heat inside the stator structure, and achieve the cooling and heat dissipation effect on the stator structure.

### Fourth Embodiment

This embodiment which is not part of the invention discloses a stator structure that can also be applied to flat wire motors.
The stator structure is similar to the stator structure in the third embodiment, and also adopts the virtual conductor design. It differs from the third embodiment in that the virtual conductor in this embodiment is composed of a tubular metal shell and a cooling medium. The metal shell is made of aluminum and designed as a hollow structure, and the cooling medium is cooling oil and located inside the metal shell. At the same time, the virtual conductor forms insulating contact with the iron core slot and the flat wire conductor by means of insulating paper.

Thus, by installing the virtual conductor composed of a metal shell and cooling medium between the slot opening and the first layer of flat wire conductor in the way of insulating contact, the distance between the first layer of flat wire conductor and the slot opening is increased, the skin effect generated by the high-frequency change of the magnetic field acts on the avoidance layer which is in the insulating contact with the iron core slot and the flat wire conductor, thereby reducing the eddy current loss of the first layer of flat wire conductor; moreover, due to the metal shell with high heat conductivity and the cooling medium inside it, the cooling effect on the stator structure can be greatly improved and the overall working efficiency of the motor can be improved.

Further, in the stator structure of this embodiment, a cooling ring may also be provided to communicate all the virtual conductors, so as to realize the circulating flow of the cooling medium and improve the cooling effect on the stator structure. The metal shell may also be made of stainless steel with high heat conductivity, and the cooling medium may be a mixture of water and ethylene glycol.

In addition, in other embodiments, the avoidance layer may adopt other forms of virtual conductors, such as selecting a non-magnetically permeable and non-conductive fluid as the virtual conductor. At this point, by adjusting the installation position of the first layer of flat wire conductor in the iron core slot, a cavity area is reserved between the slot opening and the first layer of flat wire conductor and is filled with the non-magnetically permeable and non-conductive fluid, such as dry air or cooling oil. When a cooling oil is used, the avoidance layer may be formed by filling and sealing the slot opening and blocking the end faces of the iron core slots, and then corresponding ports are provided at the end faces of the iron core slots for the entry and exit of the non-magnetically permeable and non-conductive fluid. In this way, a non-magnetically permeable and non-conductive avoidance layer can be formed in the iron core slot to increase the distance between the first layer of flat wire conductor and the slot opening, so as to reduce the eddy current loss of the first layer of flat wire conductor and improve the motor efficiency.

The above merely describes particular embodiments of the present disclosure. By the teaching of the present disclosure, a person skilled in the art can make other modifications or variations based on the above embodiments. A person skilled in the art should appreciate that, the detailed description above is only for the purpose of better explaining the present disclosure, and the protection scope of the present disclosure should be subject to the protection scope of the claims.

## Claims

1. A stator structure, comprising: a stator core (11,31), stator windings (12,32) and an avoidance layer (13,33),
the stator core (11) has an inner cylinder cavity (111), a plurality of iron core slots (112) arranged at intervals in a circumferential direction on an end face of the stator core (11), and the iron core slot (112) is communicated with the inner cylinder cavity (111) via a slot opening (113); and
the stator windings (12) have a plurality of layers of flat wire conductor (121) wound in the iron core slots (112);
**characterized in that**:
the avoidance layer (13) is located, as a separate structure, between the slot opening (113) and a first layer of flat wire conductor (121) in a radial direction of the stator core (11); and
the avoidance layer (13) is composed of two trapezoidal blocks, and the two trapezoidal blocks are fixed on the stator core (11) on two sides of a radial channel between the slot opening (113) and the first layer of the flat wire conductor (121).

2. The stator structure according to claim 1, **characterized in that**: the avoidance layer (13) is made of a material same as the stator core (11); and
the avoidance layer (13) is located inside the iron core slot (112) and is fixed on two sides of a channel between the slot opening (113) and the first layer of flat wire conductor (121).

3. The stator structure according to claim 1, **characterized in that**: the avoidance layer (13,33) has a size of 1 ~ 6 mm in the radial direction of the stator core (11,31).

4. A flat wire motor **characterized by** comprising the stator structure according to any one of claims 1-3.

## Patentansprüche

1. Eine Statorstruktur, umfassend einen Statorkern (11,31), Statorwicklungen (12,32) und eine Umgehungsschicht (13,33),
der Statorkern (11) besitzt einen inneren Zylinderhohlraum (111), eine Vielzahl von Eisenkernschlitzen (112), die in Intervallen in einer Umfangsrichtung an einer Endfläche des Statorkerns (11) angeordnet sind, und der Eisenkernschlitz (112) steht mit dem inneren Zylinderhohlraum (111) über eine Schlitzöffnung (113) in Verbindung; und
die Statorwicklungen (12) besitzen eine Vielzahl von Schichten von Flachdrahtleitern (121), die in die Eisenkernschlitze (112) gewickelt sind;
**dadurch gekennzeichnet, dass**:
die Umgehungsschicht (13) als eine separate Struktur zwischen der Schlitzöffnung (113) und einer ersten Schicht eines Flachdrahtleiters (121) in einer radialen Richtung des Statorkerns (11) positioniert ist; und
die Umgehungsschicht (13) aus zwei trapezförmigen Blöcken zusammengesetzt ist und die beiden trapezförmigen Blöcke auf dem Statorkern (11) auf zwei Seiten eines radialen Kanals zwischen der Schlitzöffnung (113) und der ersten Schicht des Flachdrahtleiters (121) befestigt sind.

2. Die Statorstruktur gemäß Anspruch 1, **dadurch gekennzeichnet, dass**: die Umgehungsschicht (13) aus einem Material besteht, das gleich ist wie das des Statorkerns (11); und
die Umgehungsschicht (13) innerhalb des Eisenkernschlitzes (112) angeordnet ist und auf zwei Seiten eines Kanals zwischen der Schlitzöffnung (113) und der ersten Schicht des Flachdrahtleiters (121) befestigt ist.

3. Die Statorstruktur gemäß Anspruch 1, **dadurch gekennzeichnet, dass**: die Umgehungsschicht (13,33) eine Größe von 1 - 6 mm in radialer Richtung des Statorkerns (11, 31) besitzt.

4. Ein Flachdrahtmotor, **dadurch gekennzeichnet, dass** er die Statorstruktur gemäß einem der Ansprüche 1 bis 3 umfasst.

## Revendications

1. Structure de stator comprenant : un noyau de stator (11, 31), des enroulements de stator (12, 32) et une couche d'évitement (13, 33),
le noyau du stator (11) a une cavité cylindrique intérieure (111), une multitude de fentes de noyau de fer (112) disposées à intervalles dans une direction circonférentielle sur une face d'extrémité du noyau du stator (11), et la fente de noyau de fer (112) est en communication avec la cavité cylindrique intérieure (111) par l'intermédiaire d'une ouverture de fente (113) ; et
les enroulements du stator (12) ont une multitude de couches de fils conducteurs plats (121) enroulés dans les fentes du noyau de fer (112) ;
**caractérisée par** fait que :
la couche d'évitement (13) est située entre l'ouverture de la fente (113) et une première couche de fil conducteur plat (121) dans une direction radiale du noyau du stator (11) ; et
la couche d'évitement (13) est composée de deux blocs trapézoïdaux, et les deux blocs trapézoïdaux sont fixés sur le noyau du stator (11) de deux côtés d'un canal radial entre l'ouverture de la fente (113) et la première couche du fil conducteur plat (121).

2. Structure de stator selon la revendication 1, **caractérisée par le fait que** : la couche d'évitement (13) est faite d'un matériau identique à celui du noyau de stator (11) ; et
la couche d'évitement (13) est située à l'intérieur de la fente du noyau de fer (112) et est fixée sur les deux côtés d'un canal entre l'ouverture de la fente (113) et la première couche de fil conducteur plat (121).

3. Structure de stator selon la revendication 1, **caractérisée par** fait que : la couche d'évitement (13, 33) a une taille de 1 à 6 mm dans la direction radiale du noyau de stator (11, 31).

4. Moteur à fil plat **caractérisé par le fait qu'**il comprend la structure de stator selon l'une des revendications 1 à 3.
